# FASCICULE DE BREVET EUROPEEN

(11) **EP 0 703 372 B1**
(45) Date de publication et mention de la délivrance du brevet: **10.06.1998**
(21) Numéro de dépôt: 95114403.9
(22) Date de dépôt: 13.09.1995
(51) Int. Cl.: F16B 39/34

(54) **Dispositif de maintien et de positionnement pour vis**
Vorrichtung zum Handhaben und Positionieren von Schrauben
Device for the handling and positioning of screws

(30) Priorité: 26.09.1994 FR 9411562
(43) Date de publication de la demande: 27.03.1996
(73) Titulaire: SIEMENS AUTOMOTIVE S.A., 31036 Toulouse Cédex (FR)
(72) Inventeur: Roques, Patrick, F-31770 Colomiers (FR); Castaing, Jean-Christophe, F-31000 Toulouse (FR)
(74) Mandataire: Fuchs, Franz-Josef, Dr.-Ing.

(56) Documents cités:
- EP-A- 0 448 361
- DE-A- 2 011 291
- DE-A- 2 103 840

## Description

La présente invention a pour objet un dispositif de maintien et de positionnement adapté pour retenir une vis sur une pièce en attente de montage.

Il est souvent nécessaire d'associer ses vis de fixation à une pièce mécanique destinée à être montée par vissage sur un assemblage. C'est le cas en particulier lorsque la pièce doit être montée dans un endroit d'accès difficile, lorsque de multiples tailles de vis doivent être employées lors d'une même opération ou lorsque la vis doit être fixée de bas en haut, risquant ainsi de tomber par gravité lors du positionnement de la pièce à assembler.

De nombreuses solutions ont été employées pour résoudre ce problème. On connaît par exemple des vis dites "imperdables" maintenues sur la pièce à assembler par une rondelle de carton emmanchée à force sur le filetage du coté opposé à la tête de la vis. Cette technique présente l'inconvénient d'introduire un élément (la rondelle) entre les pièces à assembler, imposant un logement sur l'une des deux pièces ce qui augmente le coût. De plus, il est nécessaire, pour un bon maintien, que le filetage dépasse de la pièce du coté opposé à la tête de vis, ce qui rend cette solution impraticable lorsqu'il s'agit par exemple d'installer cette vis sur une bague montée par coulissement autour d'un arbre. On a également proposé de réaliser un taraudage sur la pièce à assembler, dans lequel la vis serait pré-vissée sans dépasser, en attente de montage. Cependant, outre le coût de réalisation du taraudage et de l'opération de vissage préalable, il subsiste le risque de voir la pièce à assembler se comporter comme un contre-écrou, empêchant un montage correct, à moins d'employer des vis d'exécution spéciale présentant un diamètre aminci sous la tête.

La présente invention a donc pour but de proposer un dispositif simple et économique, qui permette de maintenir et positionner une vis sur une pièce à assembler sans présenter les inconvénients des dispositifs connus.

On atteint ces buts de l'invention, ainsi que d'autres qui apparaîtront dans la suite de la présente description, au moyen d'un dispositif de maintien et de positionnement d'une vis dans un alésage d'une pièce à assembler. Selon l'invention, ce dispositif comporte une pluralité de godrons, en matériau tendre par rapport à la vis, régulièrement répartis sur la paroi de l'alésage parallèlement à son axe, l'arête interne des godrons définissant un diamètre inférieur au diamètre externe du filetage de la vis, et une collerette déformable lors du vissage de la vis, adaptée pour bloquer le mouvement de la vis lors de son insertion par translation.

Suivant une caractéristique importante de la présente invention, le dispositif comporte en outre un épaulement permettant son blocage en translation dans l'alésage.

Selon une autre caractéristique de l'invention, la taille et le nombre de godrons sont déterminés en fonction de la dureté de la matière utilisée pour leur réalisation de manière à ce que l'effort de déformation des surfaces d'intersection avec la vis permette l'engagement en translation de celle-ci par poussée manuelle.

Selon une autre caractéristique de l'invention, l'épaisseur de la collerette est sensiblement égale au pas de la vis et son diamètre interne est sensiblement égal au diamètre de fond de filet de la vis.

Selon une caractéristique avantageuse de l'invention, les godrons et la collerette sont réalisés de manière intégrale avec une pièce comportant l'alésage.

D'autres caractéristiques et avantages du dispositif suivant l'invention apparaîtront à la lecture de la description qui va suivre et à l'examen des dessins annexés dans lesquels:
- la figure 1 représente un premier mode de réalisation du dispositif vu en coupe selon l'axe A-A matérialisé sur la figure 2,
- la figure 2 représente une vue de dessus du dispositif selon l'invention,
- la figure 3 représente un deuxième mode de réalisation du dispositif vu en coupe selon l'axe A-A matérialisé sur la figure 2, et
- la figure 4 représente un schéma de détail d'une partie du dispositif.

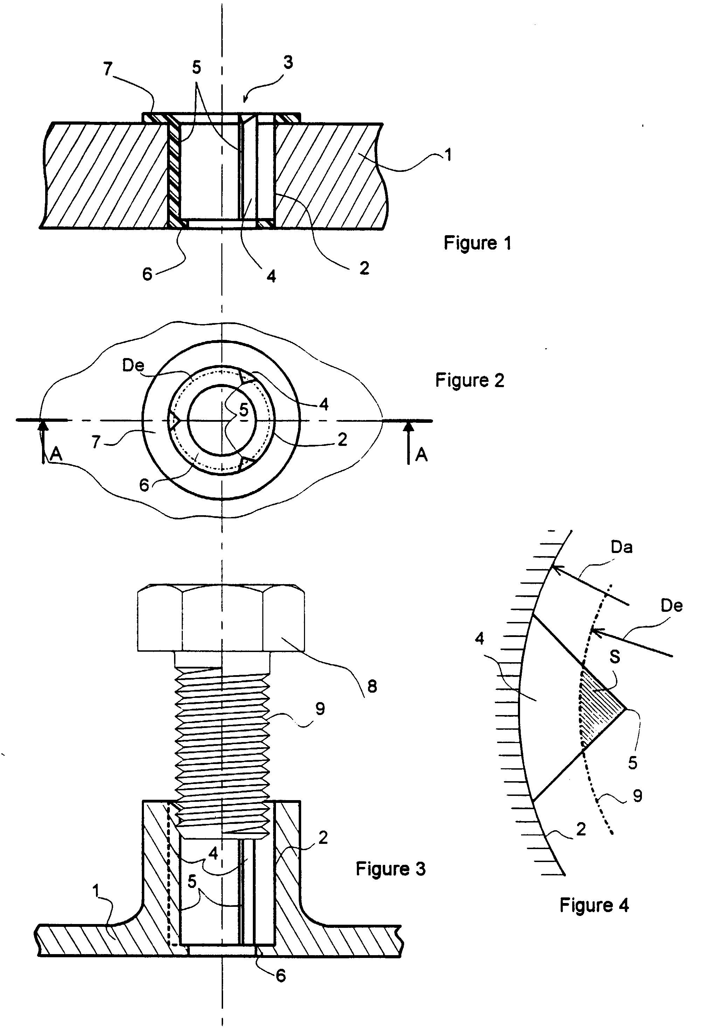

On se réfère à la figure 1 où on a partiellement représenté une pièce 1 comportant un alésage 2 de diamètre Da. Un dispositif 3 destiné à maintenir en place dans l'alésage une vis (représentée en 8 sur la figure 3) a sensiblement la forme d'un godet et comporte des éléments allongés 4 appelés godrons en saillie vers l'intérieur de l'alésage 2. Ces godrons 4, de section sensiblement triangulaire, sont répartis angulairement sur la paroi de l'alésage, l'axe de chaque godron étant parallèle à l'axe de l'alésage. Comme on peut le constater sur la vue de dessus représentée à la figure 2, l'exemple de réalisation décrit comporte trois godrons répartis à 120 degrés les uns des autres. Ces godrons présentent à une de leurs extrémités un chanfrein destiné à faciliter l'introduction de la vis 8. Une collerette 6 relie les godrons par l'extrémité opposée au chanfrein. Cette collerette présente un diamètre extérieur sensiblement égal au diamètre Da de l'alésage, un diamètre intérieur sensiblement égal au diamètre de fond de filet du filetage 9 de la vis 8, et une hauteur sensiblement égale au pas du filetage de la vis. Un épaulement 7 relie les godrons 4 par leur extrémité chanfreinée à l'extérieur de l'alésage. La longueur des godrons, de la face de l'épaulement 7 en contact avec la pièce 1 à la collerette incluse, est inférieure ou égale à la profondeur de l'alésage 2. Les godrons présentent une arête intérieure 5 qui détermine à l'intérieur de l'alésage 2 un cylindre coaxial à l'alésage dont le diamètre est inférieur au diamètre externe De du filetage 9 de la vis 8. Le dispositif 3 peut être avantageusement réalisé en matière plastique, par exemple en moulage par injection. Il peut être également réalisé en tout autre matériau présentant une dureté inférieure à celle de la vis, par exemple en laiton ou en aluminium pour une vis en acier, comme on le verra plus avant en relation avec les figures 3 et 4.

On va maintenant décrire l'emploi du dispositif selon l'invention. Le dispositif 3 est inséré, collerette 6 en premier, dans l'alésage 2 en suivant le sens prévu pour l'introduction de la vis 8, jusqu'à ce que l'épaulement 7 vienne en contact avec la surface supérieure de la pièce 1. Compte tenu de la longueur des godrons définie plus haut, la collerette 6 affleure tout au plus la surface inférieure de la pièce 1. La vis 8 est ensuite introduite dans le dispositif 3 par un simple mouvement de translation par exemple sous la poussée de la main, sans nécessiter de vissage. Sous l'effort exercé par la vis, l'arête 5 des godrons 4 se déforme plastiquement et élastiquement et la vis 8 s'enfonce jusqu'à ce que son extrémité butte sur la collerette 6. Le diamètre intérieur de celle-ci étant sensiblement égal au diamètre de fond de filet de la vis, le premier filet de la vis entre en contact avec le pourtour de la collerette 6. Cette surface de contact étant sensiblement supérieure à celle présentée par l'arête des godrons, l'effort nécessaire à l'insertion de la vis augmente brutalement et celle-ci est arrêtée dans son mouvement de translation sans dépasser la surface inférieure de la pièce 1. On remarquera que la déformation de l'arête 5 des godrons 4 est à la fois plastique et élastique, ce qui provoque un double effet. D'une part, la matière des godrons qui a flué sous l'effort d'introduction se rétablit dans l'espace entre les filets, ancrant ceux-ci et empêchant ainsi la vis de ressortir, et d'autre part, l'effort radial dû à l'élasticité de la matière plaque les godrons contre la paroi de l'alésage, immobilisant ainsi par frottement le dispositif dans l'alésage. On peut aussi constater que l'épaulement 7 est optionnel. En effet, si lors de l'insertion du dispositif 3 dans l'alésage et de l'introduction de la vis 8, la pièce 1 est plaquée sur un support adapté (non représenté), on peut se dispenser de l'épaulement 7 pour immobiliser le dispositif 3 en translation pendant l'application de l'effort d'insertion de la vis, l'immobilisation par frottement du dispositif dans l'alésage suffisant à assurer le maintien de l'ensemble une fois la vis en place. On peut également remplacer ou compléter le rôle de l'épaulement dans le maintien en position des godrons en laissant subsister au moulage du dispositif une fine toile de matière en forme de cylindre reliant les godrons entre eux par leurs cotés.

On a ainsi constaté que le dispositif 3 comportant les godrons 4 et la collerette 6 décrits ci-dessus permettait avantageusement de positionner et de maintenir en place une vis dans un alésage sans dépassement de l'extrémité de celle-ci par rapport à la pièce, et ce de manière particulièrement économique puisqu'un simple montage à la main sans vissage suffit. La pièce 1 peut ensuite être manipulée, sans perdre la vis 8, pour être mise en place sur un assemblage (non représenté). Lorsque la pièce 1 est en position d'assemblage, on applique un couple de vissage sur la vis 8. Sous l'effet combiné de la rotation de la vis et de l'effort axial appliqué par l'outil de vissage et le vissage des filets dans les godrons, l'extrémité de la vis 8 pénètre dans la collerette 6 et la déforme, surpassant ainsi le blocage que celle-ci représentait. Avantageusement, l'épaisseur de la collerette 6 est choisie sensiblement égale au pas de la vis 8, ce qui minimise le couple de vissage supplémentaire à appliquer dès le premier tour de la vis.

Un deuxième mode de réalisation du dispositif est représenté à la figure 3. Lorsque la pièce 1 est elle-même obtenue par moulage, en matière plastique par exemple, Il est avantageux de réaliser les godrons 4 et la collerette 6 simultanément lors de la fabrication de la pièce. Le dispositif de maintien est alors directement intégré à la pièce par la forme de l'alésage, et l'insertion de la vis 8 ne nécessite plus d'épaulement ou de support adapté. Le dispositif intégré selon ce mode de réalisation s'emploie de manière similaire au dispositif autonome décrit dans le mode de réalisation précédent.

On se réfère maintenant à la figure 4 où l'on a représenté schématiquement un détail du dispositif selon l'invention. On a figuré l'alésage 2 de diamètre Da, un godron 4 et le filetage 9 de diamètre externe De de la vis 8. La surface hachurée S comprise entre l'arête interne 5 du godron et le filetage 9 représente la surface d'intersection entre les filets de la vis 8 et le godron 4. Lors de l'insertion de la vis dans le dispositif, l'effort nécessaire est directement fonction de cette surface, du nombre de godrons et du matériau constituant le dispositif. Il apparaît donc qu'en fonction de la dureté de la matière employée, on pourra déterminer la taille et le nombre des godrons pour que cet effort d'insertion soit limité et applicable par exemple par simple poussée manuelle. Avantageusement encore, on pourra faire en sorte que le diamètre du cylindre défini par les arêtes 5 soit inférieur au diamètre à fond de filet de la vis 8 afin de ne pas entraîner de couple de vissage supplémentaire trop important. Bien entendu les godrons ne sont représentés ici en section triangulaire qu'à titre d'exemple. Toute autre forme de saillie à l'intérieur de l'alésage pourrait convenir comme par exemple des saillies de section hémicylindrique ou encore des méplats sur la paroi de l'alésage. On considérera alors que l'arête interne 5 du godron est matérialisée par la partie de la saillie la plus proche de l'axe de l'alésage.

## Revendications

1. Dispositif de maintien et de positionnement d'une vis (8) dans un alésage (2) d'une pièce (1) à assembler, avec une pluralité de godrons (4), en matériau tendre par rapport à la vis, régulièrement répartis sur la paroi de l'alésage parallèlement à son axe, l'arête interne (5) des godrons définissant un diamètre inférieur au diamètre externe (De) du filetage (9) de la vis, et avec une collerette (6) déformable lors du vissage de la vis, adaptée pour bloquer le mouvement de la vis lors de son insertion par translation.

2. Dispositif selon la revendication 1, caractérisé en ce qu'il comporte en outre un épaulement (7) permettant le blocage en translation du dispositif (3) dans l'alésage (2).

3. Dispositif selon la revendication 1, caractérisé en ce que la taille et le nombre de godrons (4) sont déterminés en fonction de la dureté de la matière utilisée pour leur réalisation de manière à ce que l'effort de déformation des surfaces (S) d'intersection avec la vis (8) permette l'engagement en translation de celle-ci par poussée manuelle.

4. Dispositif selon la revendication 1, caractérisé en ce que l'épaisseur de la collerette (6) est sensiblement égale au pas de la vis (8) et en ce que son diamètre interne est sensiblement égal au diamètre de fond de filet de la vis.

5. Dispositif selon la revendication 1, caractérisé en ce que les godrons (4) et la collerette (6) sont réalisés de manière intégrale avec une pièce (1) comportant l'alésage (2).

## Patentansprüche

1. Vorrichtung zum Haltern und Positionieren einer Schraube (8) in einer Bohrung (2) eines zu montierenden Bauteils (1), mit mehreren Leisten (4) aus einem bezüglich der Schraube weichen Material, die auf der Wand der Bohrung parallel zu ihrer Achse gleichmäßig verteilt sind, wobei der innere Rand (5) der Leisten einen Durchmesser definieren, der kleiner als der äußere Durchmesser (De) des Gewindes (9) der Schraube ist, und mit einem beim Einschrauben der Schraube verformbaren Bund (6), der dazu dient, die translationsförmige Bewegung der Schraube beim Einsetzen zu beenden.

2. Vorrichtung nach Anspruch 1, dadurch gekennzeichnet, daß sie ferner eine Schulter (7) zum Begrenzen der Einführbewegung der Vorrichtung (3) in die Bohrung (2) aufweist.

3. Vorrichtung nach Anspruch 1, dadurch gekennzeichnet, daß die Größe und Anzahl der Leisten (4) in Abhängigkeit von der Härte des zu ihrer Herstellung verwendeten Materials bestimmt werden, derart, daß die Kraft zur Verformung der die Schraube (8) schneidenden Flächen (S) einen translationsförmigen Eingriff mit dieser beim manuellen Eindrücken erlaubt.

4. Vorrichtung nach Anspruch 1, dadurch gekennzeichnet, daß die Dicke des Bundes (6) im wesentlichen gleich dem Gewindegang der Schraube (8) ist und daß sein Innendurchmesser im wesentlichen gleich dem Innendurchmesser des Gewindes der Schraube ist.

5. Vorrichtung nach Anspruch 1, dadurch gekennzeichnet, daß die Leisten (4) und der Bund (6) mit einem die Bohrung (2) enthaltenden Bauteil (1) einstückig ausgebildet sind.

## Claims

1. Device for holding and positioning a screw (8) in a bore (2) of a component (1) to be assembled, with a number of flutes (4), made of a material which is soft in comparison with the screw, uniformly distributed around the wall of the bore parallel to its axis, the internal edge (5) of the flutes defining a diameter which is smaller than the major diameter (De) of the threaded part (9) of the screw, and with a collar (6) which can deform when the screw is screwed in, designed to block the movement of the screw as it is inserted by translation.

2. Device according to Claim 1, characterized in that it further comprises a shoulder (7) making it possible to block the translation of the device (3) in the bore (2).

3. Device according to Claim 1, characterized in that the size and number of flutes (4) are determined as a function of the hardness of the material used to make them, so that the force required to deform the areas (S) of intersection with the screw (8) allows this screw to be engaged translationally by being pushed by hand.

4. Device according to Claim 1, characterized in that the thickness of the collar (6) is more or less equal to the pitch of the screw (8) and in that its inside diameter is more or less equal to the minor diameter of the threaded part of the screw.

5. Device according to Claim 1, characterized in that the flutes (4) and the collar (6) are made integrally with a component (1) comprising the bore (2).
